# EUROPÄISCHE PATENTSCHRIFT

(11) **EP 3 170 244 B1**
(45) Veröffentlichungstag und Bekanntmachung des Hinweises auf die Patenterteilung: **29.09.2021**
(21) Anmeldenummer: 15744934.9
(22) Anmeldetag: 03.08.2015
(51) Int. Cl.: H02K 3/40, H02K 3/30, H01B 3/04, H01B 1/20

(54) **GLIMMSCHUTZSYSTEM FÜR EINE ELEKTRISCHE MASCHINE UND ELEKTRISCHE MASCHINE**
CORONA SHIELDING SYSTEM FOR AN ELECTRICAL MACHINE AND ELECTRICAL MACHINE
SYSTÈME ANTIEFFLUVES POUR MACHINE ÉLECTRIQUE ET MACHINE ÉLECTRIQUE

(30) Priorität: 25.09.2014 DE 102014219440
(43) Veröffentlichungstag der Anmeldung: 24.05.2017
(73) Patentinhaber: Siemens Aktiengesellschaft, 80333 München (DE)
(72) Erfinder: KLAUSSNER, Bernhard, 90408 Nürnberg (DE); LANG, Jiri, 90461 Nürnberg (DE); LANG, Steffen, 91352 Hallerndorf (DE); LITINSKY, Alexander, 40233 Düsseldorf (DE); SCHMIDT, Guido, 42799 Leichlingen (DE); SCHULZ-DROST, Christian, 90427 Nürnberg-Neunhof (DE); SCHÄFER, Klaus, 90455 Nürnberg (DE); STAUBACH, Christian, 45768 Marl (DE)
(86) Internationale Anmeldenummer: PCT/EP2015/067788
(87) Internationale Veröffentlichungsnummer: WO 2016/045845

(56) Entgegenhaltungen:
- EP-A1- 0 049 128
- EP-A1- 2 362 399
- DE-A1-102011 083 214
- JP-A- 2006 246 599
- US-A1- 2007 114 704

## Beschreibung

Die Erfindung betrifft ein Glimmschutzsystem, insbesondere ein Außenglimmschutzsystem, für eine elektrische Maschine, beispielsweise eine Hochspannungsmaschine, wie einen Generator zur Erzeugung von elektrischer Energie, einen elektrischen Motor, oder ein anderes elektrische Betriebsmittel mit einer höheren Bemessungsspannung, wie insbesondere einen Trafo, eine Durchführungen oder ein Kabel.

Es werden immer leistungsstärkere Maschinen, wie beispielsweise Generatoren, entwickelt, da die fortschreitende Technik immer höhere Leistungsdichten verlangt. Ein leistungsstarker Generator, wie beispielsweise ein Turbogenerator, weist insbesondere einen Ständer (Stator) mit einem (Ständer-)Blechpaket und einer Mehrzahl an Generatornuten, in denen sich die Generatorwicklung befindet, auf.

Die Hauptisolierung dieser Generatorwicklung gegen das Blechpaket ist ein elektrisch hoch beanspruchtes System. Im Betrieb entstehen hohe Spannungen, welche in dem Isoliervolumen zwischen dem auf Hochspannung befindlichen Leiterstab und dem auf Erdpotential liegenden Blechpaket abgebaut werden müssen. An den Kanten der Bleche im Blechpaket entstehen dabei Feld-überhöhungen, die ihrerseits Teilentladungen hervorrufen. Diese Teilentladungen führen bei Auftreffen auf das Isolationssystem lokal zu sehr starken Erhitzungen. Dabei werden die organischen Materialien des Isoliersystems inklusive dieses Außenglimmschutzes sukzessive in niedermolekulare, volatile Produkte, beispielsweise in Kohlendioxid, zersetzt.

Ein wichtiger Bestandteil des Isolationssystems ist ein sogenannter Außenglimmschutz (AGS). Er wird bei größeren Generatoren und Elektromotoren direkt auf die Oberfläche der Generatorwicklungsisolation aufgebracht. Der Außenglimmschutz besteht gegenwärtig häufig aus Ruß und Graphit enthaltenden Bändern oder Lacken. Systembedingt kann bei einem solchen Isolationssystem vor allem die Grenzfläche zwischen Außenglimmschutz und Hauptisolation nicht vollständig porenfrei hergestellt werden. Daher kommt es bei hinreichend hohen elektrischen Feldstärken im Isolationssystem zu einer entsprechend hohen elektrischen Teilentladungsaktivität, die den Außenglimmschutz im Betrieb im Laufe der Zeit komplett verbrennt. Dies führt somit zu einer vorzeitigen Alterung der Isolierung und im schlimmsten Fall zu einem Erdschluss der elektrischen Maschine. Dies bedeutet regelmäßig einen irreparablen Komplettausfall der Maschine.

Der Außenglimmschutz muss einen gewissen Quadratwiderstand aufweisen, welcher in einem bestimmten Bereich liegt. Ist er zu gering, so können die Blechpakete elektrisch kurzgeschlossen werden, was zu hohen induzierten Kreisströmen führen kann, welche sich über die Enden des Blechpaketes und dem Außenglimmschutz schließen und zu stromstarken Lichtbögen führen. Bei zu hohem Widerstand hingegen kann es zu Hochspannungsfunkenerosion kommen. Idealerweise wäre der Widerstand im Außenglimmschutzsystem einstellbar, so dass eine Anisotropie herstellbar wäre, die erhöhte Leitfähigkeit in radialer Richtung, also vom stromführenden Leiter zum Blechpaket hin, und einen erhöhten Widerstand, also geringe Leitfähigkeit, in Stabrichtung zeigt. Weiterer Stand der Technik ist in den Dokumenten EP 2 362 399 A1, DE 10 2011 083214 A1 und JP 2006-246599 A offenbart.

Vor dem Hintergrund des genannten Standes der Technik ist es Aufgabe der Erfindung, die Nachteile herkömmlicher Glimmschutzsysteme zu überwinden und vorzugsweise ein stabileres Glimmschutzsystem zur Verfügung zu stellen. Ferner ist es Aufgabe der Erfindung, eine verbesserte, insbesondere ausfallsicherere, Maschine zu schaffen.

Diese Aufgabe wird mit einem Glimmschutzsystem mit den in Anspruch 1 angegebenen Merkmalen sowie mit einer elektrischen Maschine mit den in Anspruch 8 angegebenen Merkmalen gelöst. Bevorzugte Weiterbildungen der Erfindung ergeben sich aus den zugehörigen Unteransprüchen und der nachfolgenden Beschreibung.

Das erfindungsgemäße Glimmschutzsystem ist ein Glimmschutzsystem für eine elektrische Maschine, insbesondere eine Hochspannungsmaschine, zweckmäßigerweise einen Generator zur Erzeugung von elektrischer Energie, einen elektrischen Motor, oder ein sonstiges elektrisches Betriebsmittel mit einer höheren Bemessungsspannung, vorzugsweise einen Trafo, eine Durchführung oder ein Kabel. Geeigneterweise ist das Glimmschutzsystem gemäß der Erfindung ein Außenglimmschutzsystem. Das erfindungsgemäße Glimmschutzsystem umfasst eine polymere Matrix und darin angeordnete Partikel mit einem mit Glimmer gebildeten Kern sowie einer an dem Kern angeordneten, mit Metalloxid gebildeten, Schicht, wobei die Partikel eine oberflächliche Funktionalisierung zur Bindung an die Matrix aufweisen.

Vorzugsweise ist das Metalloxid Zinnoxid, insbesondere Zinndioxid. Zweckmäßigerweise ist die Matrix mit Kunststoff und/oder mit Harz, insbesondere einem Reaktivharz, gebildet.

Mittels der erfindungsgemäß vorgesehenen oberflächlichen Funktionalisierung zur Bindung an die Matrix lassen sich Fehlstellen an der Grenzfläche zwischen der Partikeloberfläche und der Matrix verringern oder sogar ganz vermeiden. Insbesondere stehen zur Vermeidung von Fehlstellen nicht allein Adhäsionskräfte zwischen der Oberfläche der Partikel und der Matrix zur Verfügung, sondern die Bindung ist durch die oberflächliche Funktionalisierung verstärkt. Einer Delaminierung des Glimmschutzsystems an der Grenzfläche zwischen Partikeloberfläche und Matrix wird somit entgegengewirkt. Gerade solche Fehlstellen aber sind aufgrund des Feldlinienverlaufs durch die unterschiedlichen Permittivitäten der Partikel und der Matrix gerade im Hinblick auf die zu erwartende elektrische Lebensdauer des Glimmschutzsystems und damit der elektrischen Maschine besonders kritisch. Zweckmäßigerweise werden gemäß der Erfindung die ansonsten vorherrschenden Adhäsionskräfte zwischen Partikeloberfläche und Matrix durch kovalente chemische Bindungen zwischen Partikeloberfläche und Matrix, zumindest zum Teil, ersetzt.

Geeigneterweise weisen die Partikel Abmessungen von, zumindest im (insbesondere arithmetischen) Mittel, höchstens einem Millimeter und vorzugsweise von, zumindest im (insbesondere arithmetischen) Mittel, höchstens 100 Mikrometern auf.

Zweckmäßigerweise umfasst die oberflächliche Funktionalisierung Moleküle, welche einerseits leicht an die Zinnoxidoberfläche des Partikels anbinden, andererseits hingegen leicht an die Matrix anbinden. Beispielsweise umfasst die oberflächliche Funktionalisierung ein Organosilan.

Geeigneterweise umfasst bei dem erfindungsgemäßen Glimmschutzsystem die Funktionalisierung ein an Metalloxid und/oder die Matrix kovalent angebundenes Molekül.

Zweckmäßigerweise umfasst bei dem erfindungsgemäßen Glimmschutzsystem die Funktionalisierung eine oligomere Struktur. Bei einer vorteilhaften Weiterbildung des erfindungsgemäßen Glimmschutzsystems umfasst die Funktionalisierung eine polymere Struktur.

Idealerweise ist bei dem erfindungsgemäßen Glimmschutzsystem die Funktionalisierung fern dem Kern mit geringerer elektrischer Polarität ausgebildet als nahe dem Kern und/oder der Kern selbst. Geeigneterweise umfasst die Funktionalisierung Mercaptopropyltrimethoxysilan.

Durch die Funktionalisierung mit matrixoptimierten Strukturen und/oder Molekülen ist das Sedimentationsverhalten verbessert, d.h. die Dichte ist reduziert und der Strömungswiderstand ist erhöht. Damit sind die Partikel in der Matrix homogener verteilt.

Darüber hinaus wird durch die Funktionalisierung der Übergang zwischen den Permittivitäten der Partikel und der Matrix homogenisiert. Eine Benetzung der Partikel mit der flüssigen Matrix ist deutlich verbessert infolge der Anpassung der Oberflächenenergie der Partikel an eine fluide Matrix.

Die erfindungsgemäße elektrische Maschine ist insbesondere eine Hochspannungsmaschine, insbesondere ein Generator zur Erzeugung von elektrischer Energie oder ein elektrischen Motor oder ein sonstiges elektrisches Betriebsmittel mit einer höheren Bemessungsspannung, insbesondere ein Trafo, eine Durchführungen oder ein Kabel.

Die erfindungsgemäße elektrische Maschine weist ein Glimmschutzsystem wie zuvor beschrieben auf.

## Patentansprüche

1. Glimmschutzsystem für eine elektrische Maschine, umfassend eine polymere Matrix und darin angeordnete Partikel, die einen Kern haben und eine Beschichtung, wobei der Kern Glimmer enthält und die Beschichtung ein Metalloxid, **dadurch gekennzeichnet, dass** die Beschichtung aus Metalloxid eine oberflächliche Funktionalisierung zur Bindung an die Matrix aufweist.

2. Glimmschutzsystem nach einem der vorhergehenden Ansprüche, bei welchem das Metalloxid Zinnoxid ist.

3. Glimmschutzsystem nach einem der vorhergehenden Ansprüche, bei welchem die Matrix mit Kunststoff und/oder mit Harz, insbesondere einem Reaktivharz, gebildet ist.

4. Glimmschutzsystem nach einem der vorhergehenden Ansprüche, bei welchem die Funktionalisierung ein an Zinnoxid und/oder die Matrix kovalent angebundenes Molekül umfasst.

5. Glimmschutzsystem nach einem der vorhergehenden Ansprüche, bei welchem die Funktionalisierung eine oligomere Struktur umfasst.

6. Glimmschutzsystem nach einem der vorhergehenden Ansprüche, bei welchem die Funktionalisierung eine polymere Struktur umfasst.

7. Glimmschutzsystem nach einem der vorhergehenden Ansprüche, bei welchem die Funktionalisierung fern dem Kern mit geringerer elektrischer Polarität ausgebildet ist als nahe dem Kern und/oder der Kern selbst.

8. Elektrische Maschine, insbesondere Hochspannungsmaschine, welche ein Glimmschutzsystem nach einem der vorhergehenden Ansprüche aufweist.

## Claims

1. Corona shielding system for an electrical machine, comprising a polymeric matrix and particles disposed therein that have a core and a coating, where the core contains mica and the coating a metal oxide, **characterized in that** the metal oxide coating has surface functionalization for binding to the matrix.

2. Corona shielding system according to any of the preceding claims, in which the metal oxide is tin oxide.

3. Corona shielding system according to either of the preceding claims, in which the matrix has been formed with plastic and/or with resin, especially a reactive resin.

4. Corona shielding system according to any of the preceding claims, in which the functionalization comprises a molecule covalently bonded to tin oxide and/or the matrix.

5. Corona shielding system according to any of the preceding claims, in which the functionalization comprises an oligomeric structure.

6. Corona shielding system according to any of the preceding claims, in which the functionalization comprises a polymeric structure.

7. Corona shielding system according to any of the preceding claims, in which the functionalization far from the core is formed with lower electrical polarity than close to the core and/or the core itself.

8. Electrical machine, especially high-voltage machine, having a corona shielding system according to any of the preceding claims.

## Revendications

1. Système de protection contre l'effet de corona destiné à une machine électrique, comprenant une matrice polymère et des particules disposées à l'intérieur de celle-ci qui comportent un noyau et un revêtement, dans lequel le noyau comprend du mica et le revêtement un oxyde métallique, **caractérisé en ce que** le revêtement en oxyde métallique présente une fonctionnalisation superficielle pour le liage à la matrice.

2. Système de protection contre l'effet de corona selon l'une des revendications précédentes, dans lequel l'oxyde métallique est de l'oxyde d'étain.

3. Système de protection contre l'effet de corona selon l'une des revendications précédentes, dans lequel la matrice est réalisée avec de la matière plastique et / ou de la résine, notamment une résine réactive.

4. Système de protection contre l'effet de corona selon l'une des revendications précédentes, dans lequel la fonctionnalisation comporte une molécule liée de façon covalente à de l'oxyde d'étain et / ou à la matrice.

5. Système de protection contre l'effet de corona selon l'une des revendications précédentes, dans lequel la fonctionnalisation comporte une structure oligomère.

6. Système de protection contre l'effet de corona selon l'une des revendications précédentes, dans lequel la fonctionnalisation comporte une structure polymère.

7. Système de protection contre l'effet de corona selon l'une des revendications précédentes, dans lequel la fonctionnalisation est formée à polarité électrique moins élevée loin du noyau que près du noyau et / ou le noyau lui-même.

8. Machine électrique, notamment machine à haute tension, comportant un système de protection contre l'effet de corona selon l'une des revendications précédentes.
